# EUROPEAN PATENT SPECIFICATION

(11) **EP 3 543 170 B1**
(45) Date of publication and mention of the grant of the patent: **02.12.2020**
(21) Application number: 19162152.3
(22) Date of filing: 12.03.2019
(51) Int. Cl.: B65D 75/30, B65D 77/20

(54) **PACK COMPRISING A TRAY FOR PACKAGING FOOD PRODUCTS CONSTITUTED OF A FLAT SHEET OF MULTI-LAYER MATERIAL**
VERPACKUNG, DIE EINEN TRAY ZUR VERPACKUNG VON LEBENSMITTELN, DER EIN FLACHES BLATT AUS MEHRSCHICHTENMATERIAL BETRÄGT, BEINHALTET
EMBALLAGE COMPRENANT UN PLATEAU DE PRODUITS ALIMENTAIRES CONSTITUÉ D'UNE FEUILLE PLATE EN MATÉRIAU MULTICOUCHE

(30) Priority: 19.03.2018 IT 201800003743
(43) Date of publication of application: 25.09.2019
(60) Divisional application: 20172316.0
(73) Proprietor: G. Mondini SpA, 25033 Cologne Bresciano (BS) (IT)
(72) Inventor: Mondini, Giovanni, 25033 Cologne (Brescia) (IT)
(74) Representative: Ponchiroli, Simone

(56) References cited:
- WO-A1-2016/182831
- US-A- 2 874 836
- US-A- 3 255 880
- US-A- 3 483 964
- US-A1- 2009 250 466

## Description

This invention relates to a pack which comprises a tray for packaging food products constituted of a flat sheet of multi-layer material.

For some years now a packaging technology has been known on the market, invented by the same Applicant, and marketed under the Slimfresh® trademark, in which food products are packaged in packs constituted of only two elements, both flat (before packaging): a lower tray constituted of a flat sheet of multi-layer material, and an upper protective film.

The tray usually has a rectangular shape with rounded corners, and the flat sheet comprises a paper-based lower layer and a plastic material upper layer.

The protective film is sealed to the upper layer of the tray along a ringshaped connecting zone which surrounds the food product.

The aim of this invention is to improve on this technology which, despite many advantages, also has some disadvantages if the user does not consume the entire food product in one go, but instead wants to preserve a part for later. In fact, the simplicity of the pack makes it relatively difficult to preserve the products contained in it in the best possible way between one use and the next, above all to protect them from the ambient air, therefore it may be necessary either to transfer the remaining food product to a different container or to cover the entire container with a protective film.

WO 2016/182831 A1 discloses an open/reclosable vacuum skin package which includes a bottom web, a product, and a top web. The bottom web includes a laminate having a shaped die-cut, and a label overlying the die-cut, and adhered to the laminate, such that when the label is peeled back, a portion of the laminate is peeled back, opening the package. The package can be reclosed by returning the label to its original position on the laminate.

US 3255880 discloses a container for an instrument, which comprises a transparent plastic shell defining a cavity open at its lower end, and a bottom panel of flexible sheet material sealingly secured to said shell about the bottom of said cavity. The bottom panel is die cut to define an integral and removable closure member.

US 2874836 A discloses a collapsible, openable, re-usable package for merchandise articles which has a flexible carrier panel partially divided by a substantially U-shaped slit into a main body portion and an integral inverted U shaped end portion. A concave plastic member has its outer areas secured to the outer surface of the body portion of the panel, including the outer surface of the inverted U-shaped end portion, The U-shaped end portion of the panel is bendable in one direction to provide an opening partially defined by said slit between said plastic member and said panel. US 2009/250466 A1 discloses a sealed container in which a seal film is bonded onto the upper surface of a flange portion surrounding an opening portion of a plastic pack container to seal the pack container. A broken portion, including a cut-off line and a connection part, is formed in a part or the whole of the flange portion, whereby the flange portion can separated into an inner portion near the opening portion and an outer portion near the peripheral edge. A peeling film is bonded onto the lower surface of the flange portion in which the broken portion is formed. By peeling off the peeling film along the flange portion, the broken portion which separates the flange portion into the inner and outer portions can be exposed

Finally US 3483964 A discloses a container body open at one and comprising an end wall, a side wall integral with the end wall, and an integral flange surrounding the side wall and extending outwardly from the sidewall. A line of weakness is provided in the flange, which surrounds more than half of the side wall. Upon bending the flange out of the normal plane of the flange, the line of weakness is easily ruptured to separate said closure and the portion of said flange outwardly from said line of weakness, from said body.

In this context the technical purpose which forms the basis of this invention is to provide a pack according to claim 1, which overcomes the above-mentioned disadvantages.

In particular, the technical purpose of this invention it to provide a pack making it possible to preserve part of the food product for later in a better way than is possible with the packs of this type already on sale.

A further technical purpose of this invention is to provide a pack which is easy to use for the consumer.

The technical purpose and the aims indicated are substantially achieved by a pack as described in the appended claims.

Further features and the advantages of this invention are more apparent in the detailed description, with reference to the accompanying drawings which illustrate several preferred, non-limiting embodiments of a tray for packaging food products constituted of a flat sheet of multi-layer material, and a pack which comprises that tray, in which:
- Figure 1 shows, in plan view, a tray with a long dash and short dash line highlighting a protective film couplable to the tray;
- Figure 2 is an enlarged view of the detail II of Figure 1;
- Figure 3 is an enlarged view of the detail III of Figure 1;
- Figure 4 is an axonometric view of the tray of Figure 1 with one part bent;
- Figure 5 is an enlarged view of the detail V of Figure 4;
- Figure 6 shows the tray of Figure 1 highlighting zones for connecting to the protective film;
- Figure 7 shows an alternative embodiment of the tray of Figure 1; and
- Figure 8 is a side view in cross-section of an example of a sealing machine usable for constraining a protective film to the tray.

With reference to the above-mentioned figures the numeral 1 denotes in its entirety a tray for packaging food products.

As already indicated, the tray 1 is constituted of a single flat sheet of multi-layer material which comprises at least one paper-based lower layer and one plastic material upper layer (which are not highlighted in the accompanying figures), and which has a perimetric edge 2. Optionally, there may also be further, intermediate layers.

Advantageously, the upper layer may be made of material transparent to visible light and the paper-based layer may be printed with various types of images and/or information.

In terms of shape, the flat sheet may adopt the shape best suited to the requirements. In the preferred embodiment illustrated in the accompanying figures it has a substantially rectangular shape with rounded corners. However, other shapes are possible (for example, oval, circular, square, rhomboid, etc.).

The tray 1 has an elongate cut 3 that extends near the perimetric edge 2 but remains spaced from it along its entire length. In the embodiments illustrated, the elongate cut 3 extends in particular between two ends 4 which are separate and spaced from one another and it advantageously extends for most of the extent of the perimetric edge 2 (that is to say, along more than half of the extent of the perimetric edge 2) but not along the entire perimetric edge 2.

The elongate cut 3 is shaped in such a way that between it and the perimetric edge 2 a portion of the flat sheet remains identified which defines a frame 5 that at least partly surrounds an inner part 6 of the flat sheet, the inner part 6 on which, in use, a food product is to be positioned. That result may be obtained by shaping the elongate cut 3 in such a way that it forms a concavity on the side facing the inner part 6 and a convexity on the side facing the outside of the tray 1.

Advantageously, in the preferred embodiments both the elongate cut 3 and the frame 5, in plan view, overall are U-shaped or C-shaped.

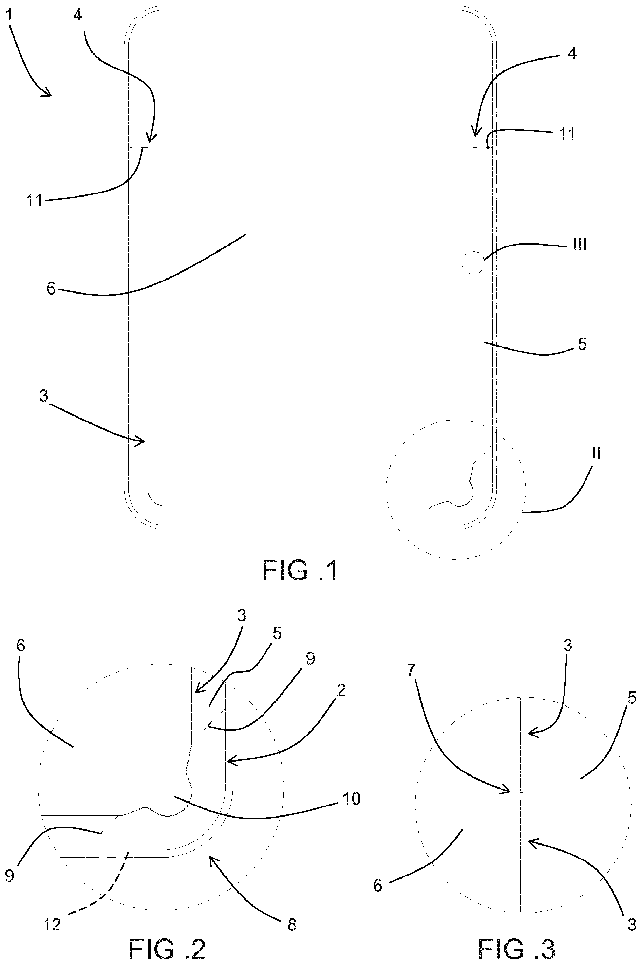

Preferably, in order to give the tray 1 stability at least before its use to make a pack, it is possible to ensure that there are one or more connecting points 7 present between the frame 5 and the inner part 6 of the flat sheet, at which the elongate cut 3 is interrupted for a short stretch (Figure 3). Those connecting points 7 are advantageously obtained by making the elongate cut 3 in stretches, with each stretch separated from the next by a connecting point 7, so that each connecting point is a sort of "protuberance" left while performing the cut. In any case, they are made in such a way as to constitute facilitated breaking zones, and for that purpose they have a length (measured as the distance between the two adjacent stretches of the elongate cut 3) which is small, usually around 1 mm or less.

In other embodiments which in any case comprise the presence of connecting points 7, suitable for keeping the frame 5 attached to the inner part 6 in the absence of external stresses, it may even be the case that both the elongate cut 3 and the frame 5 completely surround the inner part 6 of the flat sheet, that is to say, that the frame 5 is a single whole ring positioned around the inner part 6 and only connected to the inner part by the connecting points 7 (solution not illustrated).

According to a second innovative aspect of this invention, the frame 5 has at least one opening portion 8, intended to facilitate the opening of a pack according to the invention which comprises the tray 1, as described in more detail below.

The opening portion 8 corresponds to a stretch of the frame 5 which is delimited, on two opposite sides, by two main preferential bending lines 9 which are made in the frame 5, and on the other two sides, respectively by the perimetric edge 2 and by the elongate cut 3 (however, the later side may not be present if the main preferential bending lines 9 meet at a single point of the elongate cut 3).

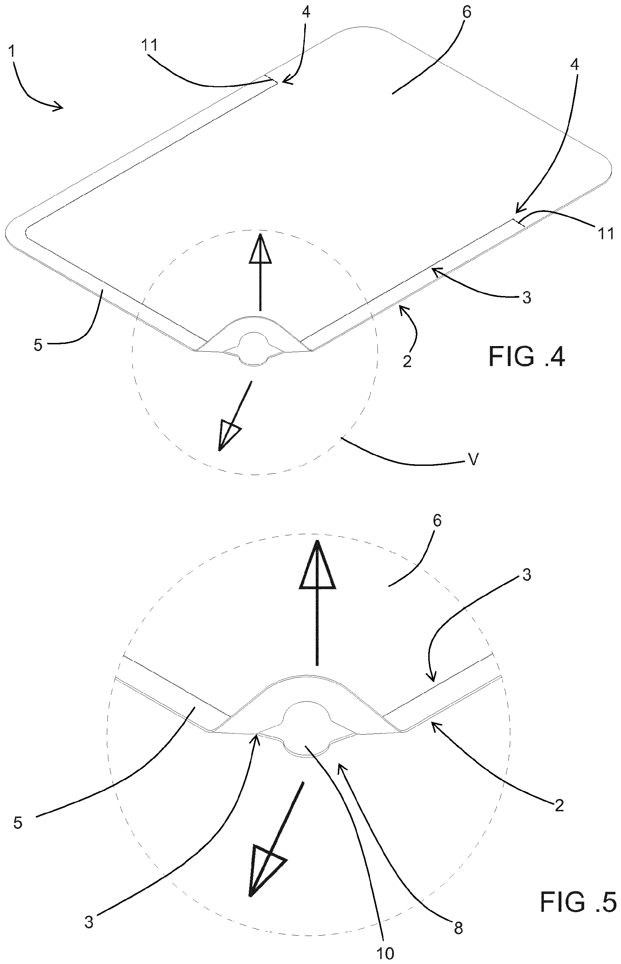

Each main preferential bending line 9 extends from the perimetric edge 2 to the elongate cut 3 and is advantageously constituted of a localised crushing of the flat sheet. Together, the two main preferential bending lines 9 allow bending of the opening portion 8 of the frame 5 relative to the rest of the flat sheet (Figures 4 and 5). Moreover, in order to facilitate the achievement of that result, the main preferential bending lines 9 are advantageously straight, and aligned with one another in such a way that one constitutes a continuation of the other along the same straight line.

With reference to a straight line which passes through the points at which the two main preferential bending lines 9 intersect the elongate cut 3, in the preferred embodiment the elongate cut 3 extends in such a way as to define a projection 10 of the inner part 6 of the flat sheet, which protrudes towards the perimetric edge 2, going beyond that straight line. In this way, when the opening portion 8 of the frame 5 is bent upwards (Figure 5) it is possible to use the protruding projection 10 to hold the inner part 6 of the flat sheet while opening the pack (this point will be described in more detail below).

In the preferred embodiments, the opening portion 8 is made at a linking zone between two further portions of the frame 5 which extend mainly along lines that are at an angle or perpendicular to each other. For example, the opening portion 8 may be made at the main corners of the flat sheet (Figure 1).

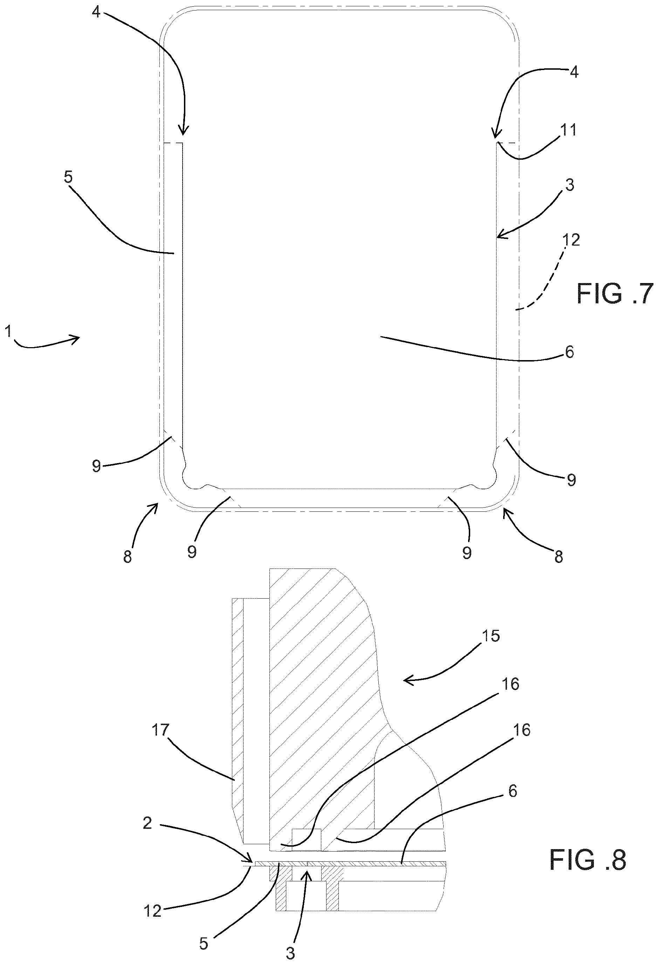

Even if in general one opening portion 8 may be sufficient, there are also embodiments in which the frame 5 has a plurality of opening portions 8, such as that in Figure 7.

In the preferred embodiment, in which the cut has two ends 4 which are separate and spaced from one another, it is also the case that the flat sheet has two secondary preferential bending lines 11, which each extend between one end 4 of the elongate cut 3 and the perimetric edge 2, and which have the function of allowing, in use, a bending of the whole frame 5 relative to the rest of the flat sheet. Advantageously, the secondary preferential bending lines 11 are also straight, and aligned with one another in such a way that one constitutes a continuation of the other along the same straight line.

As already indicated, this invention relates a pack which uses the tray 1 described above together with a protective film 12 fixed to it, for containing a food product.

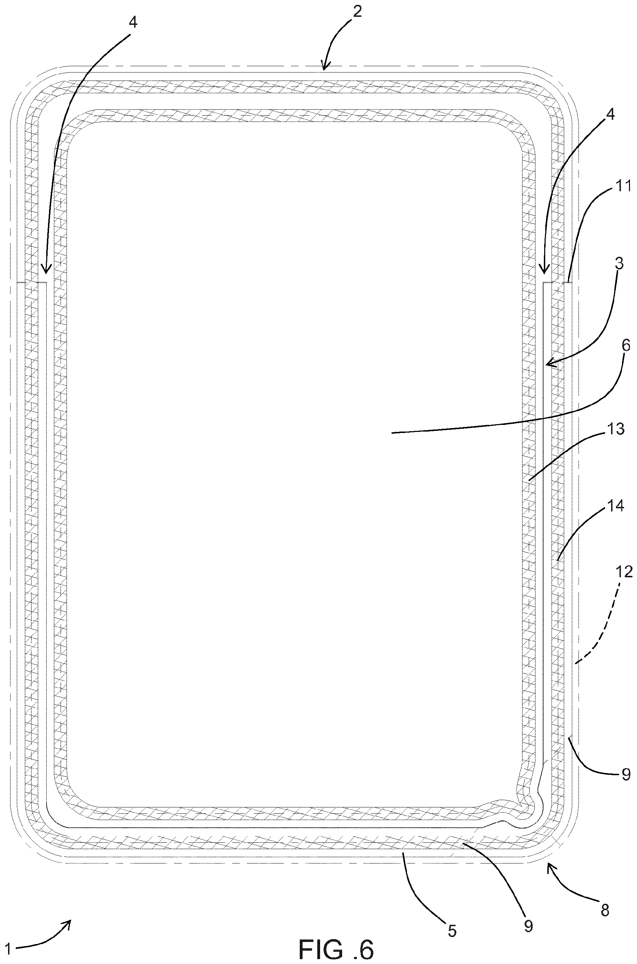

In this case, the food product will be positioned on the inner part 6 of the flat sheet and there will also be at least two separate connecting zones 13, 14 between the protective film 12 and the tray 1, a first connecting zone 13 that extends continuously on the inner part 6 of the flat sheet in a closed ring that surrounds the food product (that is to say, inside the frame 5), and a second connecting zone 14 that extends along the frame 5 externally relative to the first connecting zone 13. Advantageously, the second connecting zone 14 also extends continuously in a closed ring, which may be either external relative to the closed ring along which the first connecting zone 13 extends (Figure 6), or partly overlapping it (in the case in Figure 6, for example, the two connecting zones 13, 14 could overlap at the top part).

The first connecting zone 13 does not affect the protruding projection 10 defined by the elongate cut 3 which is therefore detached from the protective film 12.

Therefore, advantageously, the pack is made in such a way that it is reclosable, that is to say, in such a way that it can be partly closed again after the protective film 12 has been detached from the tray 1 at least at one part of the first connecting zone 13. In other words, at least at the first connecting zone 13 the protective film 12 is connected to the tray 1 in such a way that it can be detached and stuck down again (technical solution in itself known and therefore not described in detail).

Figure 8 shows a schematic example of a detail of a sealing machine 15 capable of simultaneously making the protective film 12 stick to the tray 1 at two connecting zones 13, 14 which are near but spaced from one another; for that purpose the machine has two sealing bodies 16 which are near but spaced from one another. The machine also has a blade 17 suitable for cutting a piece of protective film 12 from a continuous web.

Use of the pack described above is very simple.

In order to open it, the user first uses his or her fingers to grip the opening portion 8 of the frame 5 and the protective film 12 connected to it and bends them upwards relative to the rest of the flat sheet (as in Figure 5). At this point, if the protruding projection 10 is present, with his or her other hand the user can grip the protruding projection 10 which has been freed below the portion of protective film 12 which has been bent upwards. Firmly holding the opening portion 8 and the protective film 12 fixed to it with one hand, and the protruding projection 10 with the other hand, the user can then apply the force necessary to gradually cause both bending of the whole frame 5 upwards, and separation of the protective film 12 from the tray 1 at the first connecting zone 13.

Once the pack has been opened enough to gain access to the food product, the user can take out the quantity of it that is required. If not all of the food product is used, with an inverse movement relative to that described, the user can return the frame 5 to the same plane as the rest of flat sheet, then simply apply gentle pressure on the protective film 12 at the first connecting zone 13 so as to stick down the protective film 12 on the tray 1 again, sufficiently reclosing the pack for guaranteeing good preservation of the food product.

This invention brings important advantages.

Thanks to this invention it has been possible to make a pack comprising a tray of the type constituted of a flat sheet of multi-layer material which allows to obtain better preservation of the food products between two uses at different times. The pack according to this invention is extremely easy to use.

Finally, it should be noticed that this invention is relatively easy to produce and that even the cost linked to implementing the invention is not very high.

## Claims

1. A pack containing at least one food product comprising:
a tray (1) constituted of a flat sheet of multi-layer material, wherein the flat sheet comprises at least one lower layer and one plastic material upper layer and has a perimetric edge (2), wherein the tray (1) has an elongate cut (3) that extends near the perimetric edge (2) and spaced from it, and wherein between the elongate cut (3) and the perimetric edge (2) a portion of the flat sheet is identified which defines a frame (5) that at least partly surrounds an inner part (6) of the flat sheet;
a food product positioned on the inner part (6) of the flat sheet; and
at least one protective film (12) fixed to the tray (1); said pack being **characterised in that**:
- said lower layer is paper-based, and
- said pack comprises at least two connecting zones (13), (14) that are at least partly separate, between the protective film (12) and the tray (1), a first connecting zone (13) that extends continuously on the inner part (6) of the flat sheet in a closed ring that surrounds the food product, and a second connecting zone (14) that extends at least along the frame (5) and externally relative to the first connecting zone (13).

2. The pack according to claim 1, wherein the pack is reclosable and wherein, at the first connecting zone (13), the protective film (12) is fixed to the tray (1) in such a way that it can be detached and stuck down again.

3. The pack according to claim 1 or 2, wherein the second connecting zone (14) also extends continuously in a closed ring.

4. The pack according to any of claims 1 to 3, wherein the frame (5) has at least one opening portion (8), delimited on two opposite sides by two main preferential bending lines (9) which are made in the frame (5), wherein each main bending line extends from the perimetric edge (2) to the elongate cut (3), and wherein the main preferential bending lines (9) allow a bending of the opening portion (8) of the frame (5) relative to the rest of the flat sheet.

5. The pack according to claim 4, wherein at the opening portion (8) of the frame (5), the elongate cut (3) delimits a protruding projection (10) of the inner part (6) of the flat sheet, which protrudes towards the perimetric edge (2), relative to a straight line that passes through two points at which the two main preferential bending lines (9) intersect the elongate cut (3).

6. The pack according to claim 4 or 5, wherein the two main preferential bending lines (9) extend along the same straight line.

7. The pack according to any of claims 4 to 6, wherein the opening portion (8) is made at a linking zone between two further portions of the frame (5) which extend mainly along lines that are at an angle or perpendicular to each other.

8. The pack according to any of claims 4 to 7, wherein the frame (5) has a plurality of opening portions (8).

9. The pack according to any of claims 1 to 8, wherein the elongate cut (3) extends for most of the extent of the perimetric edge (2).

10. The pack according to any of claims 1 to 9, wherein the elongate cut (3) and the frame (5), in plan view, are each overall U-shaped or C-shaped.

11. The pack according to any of claims 1 to 10, wherein the flat sheet also has two secondary preferential bending lines (11), which each extend between one end (4) of the elongate cut (3) and the perimetric edge (2), for allowing, in use, a bending of the whole frame (5) relative to the rest of the flat sheet.

12. The pack according to any of claims 1 to 11, wherein there are one or more connecting points (7) present between the frame (5) and the inner part (6) of the flat sheet, at which the elongate cut (3) is interrupted, said connecting points (7) constituting facilitated breaking zones.

## Patentansprüche

1. Eine Packung, die mindestens ein Lebensmittelprodukt enthält, Folgendes umfassend:
ein Tray (1), das aus einem flachen Blatt eines mehrschichtigen Materials besteht, wobei das flache Blatt mindestens eine untere Schicht und eine obere Schicht aus Kunststoff beinhaltet und einen äußeren Rand (2) hat, wobei das Tray (1) einen länglichen Schnitt (3) hat, der sich in der Nähe des äußeren Rands (2) erstreckt und in einem Abstand von diesem ist, und wobei zwischen dem länglichen Schnitt (3) und dem äußeren Rand (2) ein Teil des flachen Blatts identifiziert ist, der einen Rahmen (5) definiert, der zumindest teilweise einen inneren Teil (6) des flachen Blatts umringt;
ein Lebensmittelprodukt, das auf dem inneren Teil (6) des flachen Blatts positioniert ist; und mindestens eine Schutzfolie (12), die am Tray (1) befestigt ist;
- besagte Packung ist dabei durch Folgendes gekennzeichnet:
- besagte untere Schicht ist auf Papierbasis, und
- besagte Packung umfasst
mindestens zwei Verbindungsbereiche (13), (14), die zumindest teilweise getrennt sind, zwischen der Schutzfolie (12) und dem Tray (1), einen ersten Verbindungsbereich (13), der sich durchgängig am inneren Teil (6) des flachen Blatts in einem geschlossenen Ring erstreckt, der das Lebensmittelprodukt umringt, und einen zweiten Verbindungsbereich (14), der sich mindestens entlang dem Rahmen (5) und im Verhältnis zum ersten Verbindungsbereich (13) außen erstreckt.

2. Die Packung nach dem Patentanspruch 1, wobei die Packung wiederverschließbar ist und wobei, im ersten Verbindungsbereich (13), die Schutzfolie (12) solcherart am Tray (1) befestigt ist, dass sie abgelöst und wieder nach unten angeklebt werden kann.

3. Die Packung nach den Patentansprüchen 1 oder 2, wobei der zweite Verbindungsbereich (14) sich ebenfalls durchgängig in einem geschlossenen Ring erstreckt.

4. Die Packung nach jedem der Patentansprüche 1 bis 3, wobei der Rahmen (5) mindestens einen Öffnungsanteil (8) hat, der an zwei gegenüberliegenden Seiten durch zwei bevorzugte Hauptknicklinien (9) begrenzt ist, die im Rahmen (5) angefertigt sind, wobei sich jede Hauptknicklinie vom äußeren Rand (2) zum länglichen Schnitt (3) erstreckt und wobei die bevorzugten Hauptknicklinien (9) ein Biegen des Öffnungsanteils (8) des Rahmens (5) im Verhältnis zum Rest des flachen Blatts erlauben.

5. Die Packung nach dem Patentanspruch 4, wobei am Öffnungsanteil (8) des Rahmens (5) der längliche Schnitt (3) einen herausragenden Vorsprung (10) des inneren Teils (6) des flachen Blatts begrenzt, der in Richtung des äußeren Rands (2) herausragt, im Verhältnis zu einer geraden Linie, die zwischen zwei Punkten durchläuft, an denen die zwei bevorzugten Hauptknicklinien (9) den länglichen Schnitt (3) kreuzen.

6. Die Packung nach den Patentansprüchen 4 oder 5, wobei sich die zwei Hauptsollknicklinien (9) entlang derselben geraden Linie erstrecken.

7. Die Packung nach jedem der Patentansprüche 4 bis 6, wobei der Öffnungsanteil (8) in einem Verbindungsbereich zwischen zwei weiteren Anteilen des Rahmens (5) hergestellt ist, die sich hauptsächlich entlang Linien erstrecken, die in einem Winkel oder lotrecht zueinander verlaufen.

8. Die Packung nach jedem der Patentansprüche 4 bis 7, wobei der Rahmen (5) eine Mehrzahl von Öffnungsanteilen (8) hat.

9. Die Packung nach jedem der Patentansprüche 1 bis 8, wobei sich der längliche Schnitt (3) über den Großteil der Ausdehnung des äußeren Rands (2) erstreckt.

10. Die Packung nach jedem der Patentansprüche 1 bis 9, wobei der längliche Schnitt (3) und der Rahmen (5) in einer Draufsicht beide allgemein U-förmig oder C-förmig sind.

11. Die Packung nach jedem der Patentansprüche 1 bis 10, wobei das flache Blatt auch zwei sekundäre bevorzugte Knicklinien (11) hat, die sich jeweils zwischen einem Ende (4) des länglichen Schnitts (3) und dem äußeren Rand (2) erstrecken, um im Gebrauch ein Biegen des gesamten Rahmens (5) im Verhältnis zum Rest des flachen Blatts zu erlauben.

12. Die Packung nach jedem der Patentansprüche 1 bis 11, wobei es ein oder mehrere Verbindungsstellen (7) gibt, die sich zwischen dem Rahmen (5) und dem inneren Teil (6) des flachen Blatts befinden, an dem bzw. an denen der längliche Schnitt (3) unterbrochen ist, besagte Verbindungsstellen (7) stellen dabei Bereiche zur Erleichterung des Brechens dar.

## Revendications

1. Un emballage contenant au moins un produit alimentaire comprenant :
un plateau (1) constitué d'une feuille plate de matériau multicouche, où la feuille plate comprend au moins une couche inférieure et une couche supérieure de matériau plastique et a un bord périmétrique (2), où le plateau (1) a une entaille allongée (3) qui s'étend à proximité du bord périmétrique (2) et espacée de celui-ci, et où, entre l'entaille allongée (3) et le bord périmétrique (2), une portion de la feuille plate est identifiée qui définit un cadre (5) qui entoure au moins partiellement une partie intérieure (6) de la feuille plate ;
un produit alimentaire positionné sur la partie intérieure (6) de la feuille plate ; et
au moins un film protecteur (12) fixé au plateau (1) ;
ledit emballage étant **caractérisé en ce que** :
- ladite couche inférieure est à base de papier, et
- ledit emballage comprend
au moins deux zones de raccordement (13), (14) qui sont au moins partiellement distinctes, entre le film protecteur (12) et le plateau (1), une première zone de raccordement (13) qui s'étend de façon continue sur la partie intérieure (6) de la feuille plate selon une boucle fermée qui entoure le produit alimentaire, et une deuxième zone de raccordement (14) qui s'étend au moins le long du cadre (5) et extérieurement par rapport à la première zone de raccordement (13).

2. L'emballage selon la revendication 1, dans lequel l'emballage est refermable et dans lequel, au niveau de la première zone de raccordement (13), le film protecteur (12) est fixé au plateau (1) de manière à ce qu'il puisse être détaché et recollé.

3. L'emballage selon la revendication 1 ou 2, dans lequel la deuxième zone de raccordement (14) s'étend elle aussi de façon continue selon une boucle fermée.

4. L'emballage selon l'une quelconque des revendications de 1 à 3, dans lequel le cadre (5) a au moins une portion d'ouverture (8), délimitée sur deux côtés opposés par deux lignes principales de pliage préférentiel (9) qui sont réalisées dans le cadre (5), dans lequel chaque ligne principale de pliage s'étend du bord périmétrique (2) à l'entaille allongée (3), et dans lequel les lignes principales de pliage préférentiel (9) permettent un pliage de la portion d'ouverture (8) du cadre (5) par rapport au reste de la feuille plate.

5. L'emballage selon la revendication 4, dans lequel au niveau de la portion d'ouverture (8) du cadre (5), l'entaille allongée (3) délimite un appendice en saillie (10) de la partie intérieure (6) de la feuille plate, qui dépasse vers le bord périmétrique (2), par rapport à une droite qui passe par deux points au niveau desquels les deux lignes principales de pliage préférentiel (9) coupent l'entaille allongée (3).

6. L'emballage selon la revendication 4 ou 5, dans lequel les deux lignes principales de pliage préférentiel (9) s'étendent le long de la même droite.

7. L'emballage selon l'une quelconque des revendications de 4 à 6, dans lequel la portion d'ouverture (8) est réalisée au niveau d'une zone de liaison entre deux autres portions du cadre (5) qui s'étendent principalement le long de lignes qui sont inclinées ou perpendiculaires l'une par rapport à l'autre.

8. L'emballage selon l'une quelconque des revendications de 4 à 7, dans lequel le cadre (5) a une pluralité de portions d'ouverture (8).

9. L'emballage selon l'une quelconque des revendications de 1 à 8, dans lequel l'entaille allongée (3) s'étend sur la plus grande partie du bord périmétrique (2).

10. L'emballage selon l'une quelconque des revendications de 1 à 9, dans lequel l'entaille allongée (3) et le cadre (5), dans une vue en plan, sont chacun conformés globalement en « U » ou en « C ».

11. L'emballage selon l'une quelconque des revendications de 1 à 10, dans lequel la feuille plate a également deux lignes secondaires de pliage préférentiel (11), qui s'étendent chacune entre une extrémité (4) de l'entaille allongée (3) et le bord périmétrique (2), pour permettre, lors de l'utilisation, un pliage de tout le cadre (5) par rapport au reste de la feuille plate.

12. L'emballage selon l'une quelconque des revendications de 1 à 11, dans lequel un ou plusieurs points de raccordement (7) sont présents entre le cadre (5) et la partie intérieure (6) de la feuille plate, au niveau desquels l'entaille allongée (3) est interrompue, lesdits points de raccordement (7) constituant des zones de rupture facilitée.
